# EUROPÄISCHE PATENTANMELDUNG

(11) **EP 4 707 849 A1**
(43) Veröffentlichungstag der Anmeldung: **11.03.2026**
(21) Anmeldenummer: 24198897.1
(22) Anmeldetag: 06.09.2024
(51) Int. Cl.: G01S 7/40, G01S 13/931

(54) **VORRICHTUNG, DIAGNOSEVORRICHTUNG UND VERFAHREN ZUM KALIBRIEREN WENIGSTENS EINES RADARSENSORS EINES FAHRZEUGS**

(71) Anmelder: Hella Gutmann Solutions GmbH, 79241 Ihringen (DE)
(72) Erfinder: Wicky, Hervé, 68230 Turckheim (FR); Aring, Carsten, 59557 Lippstadt (DE)
(74) Vertreter: Pfenning, Meinig & Partner mbB

(57) **Zusammenfassung**

Die Erfindung betrifft eine Vorrichtung, eine Diagnosevorrichtung und ein Verfahren zum Kalibrieren wenigstens eines Radarsensors eines Fahrzeugs.

Die Vorrichtung (1) Vorrichtung (1) umfasst:
• eine Reflektorplatte (10), die dazu eingerichtet ist, Radarstrahlung des Radarsensors (25) zu reflektieren,
• ein Haltegestell (2), das die Reflektorplatte (10) gegenüber einem Untergrund (3) abstützt,
• wenigstens einen ersten Aktor (14), der dazu eingerichtet, eine Winkelposition der Reflektorplatte (10) um wenigstens eine erste Achse (A) einzustellen.

## Beschreibung

Die Erfindung betrifft eine Vorrichtung, eine Diagnosevorrichtung und ein Verfahren zum Kalibrieren wenigstens eines Radarsensors eines Fahrzeugs.

In Fahrzeugen und speziell Straßenverkehrsfahrzeugen eingesetzte Assistenzsysteme umfassen oftmals einen Radarsensor. Diese werden in der Regel als Abstandsmessgerät betrieben und messen den Abstand zu einem vorausfahrenden Fahrzeug oder einem in Fahrtrichtung vor dem Fahrzeug liegenden Hindernis. Die Assistenzsysteme können beispielsweise in Abhängigkeit von der Fahrzeuggeschwindigkeit bei Gefahr akustische, optische oder taktile Warnsignale erzeugen und/oder selbsttätig die Bremse des Fahrzeugs betätigen.

Ein Beispiel ist ein "Adaptive Cruise Control", ACC,- Assistenzsystem. Dieses unterstützt den Fahrer, indem es den Verkehr automatisch beobachtet, den Abstand zu vorausfahrenden Fahrzeugen oder im Fahrweg angeordneten Hindernissen mittels eines Radarsensors misst und in Abhängigkeit von diesen Messergebnissen die Geschwindigkeit des Fahrzeuges etwa unter Berücksichtigung eines voreingestellten Sicherheitsabstandes regelt. Für den Fall, dass dieser voreingestellte Sicherheitsabstand unterschritten wird, kann selbsttätig ein Bremsvorgang eingeleitet werden oder die Geschwindigkeit anderweitig, etwa durch selbsttätige Rücknahme des Gaspedals reduziert werden.

Im Zusammenhang mit derartigen Assistenzsystemen und mit Radarsensoren allgemein ist es erforderlich, die korrekte Ausrichtung des Radarsensors in regelmäßigen Abständen zu überprüfen, zu vermessen und ggf. zu korrigieren. Andernfalls können ungenaue Messsignale der Radarsensoren zu einer ungenauen Funktionsweise der Assistenzsysteme führen und dadurch die Fahrsicherheit gefährden.

Die DE 20 2015 106 939 U1 offenbart eine Lösung zum Kalibrieren von Radarsensoren, um deren korrekte Ausrichtung und damit deren Messgenauigkeit sicherzustellen. Hierfür wird unter anderem eine winkelverstellbare Platte gelehrt, an der bei Bedarf eine einen Laser tragende ferromagnetische Befestigungsplatte angebracht werden kann. Die Winkelverstellung wird manuell vorgenommen.

Die erforderliche Winkelverstellung derartiger Platten wird in der Regel seitens der Fahrzeughersteller vorgegeben und es können auch mehrere sukzessive Winkelverstellungen mit jeweils anschließenden Kalibriermessungen innerhalb des Kalibriervorgangs eines Radarsensors erforderlich sein.

Es hat sich gezeigt, dass mittels existierender Lösungen nach wie vor ein Verbesserungspotenzial hinsichtlich der erzielbaren Kalibriergenauigkeit und dadurch Messgenauigkeit von fahrzeuggebundenen Radarsensoren existiert.

Demnach stellt sich die Erfindung die Aufgabe, die Kalibriergenauigkeit und dadurch Messgenauigkeit von fahrzeuggebundenen Radarsensoren weiter zu verbessern.

Diese Aufgabe wird durch die Gegenstände der beigefügten unabhängigen Ansprüche gelöst. Vorteilhafte Ausführungsformen sind in dieser Beschreibung, in den Figuren und in den abhängigen Ansprüchen angegeben.

Entsprechend wird eine Vorrichtung zum Kalibrieren wenigstens eines Radarsensors eines Fahrzeugs vorgeschlagen, wobei die Vorrichtung umfasst:
- eine Reflektorplatte, die dazu eingerichtet ist, Radarstrahlung des Radarsenders zu reflektieren,
- ein Haltegestell, das die Reflektorplatte gegenüber einem Untergrund abstützt,
- wenigstens einen ersten Aktor, der dazu eingerichtet, eine Winkelposition der Reflektorplatte um wenigstens eine erste Achse einzustellen.

Mit der hier offenbarten Lösung kann die Winkeleinstellung der Reflektorplatte aktorisch und somit nicht-manuell umgesetzt werden und daher entsprechend präzise erfolgen. Dies hilft, Fehlerpotenziale zu beseitigen, die bei der bisherigen manuellen Winkelverstellung auftreten können. Insbesondere können von einem Fahrzeughersteller vorgegebene Soll-Winkelpositionen genauer angefahren und auch während des Kalibriervorgangs zuverlässig aufrechterhalten werden, als dies bei manuellen Lösungen der Fall ist.

Eine gattungsgemäße Reflektorplatte wird seitens der Anmelderin als Bestandteil des sogenannten "Radar Kit 1 EVO" vertrieben, wobei diese Reflektorplatte jedoch bisher ausschließlich manuell verkippbar und ferner über einen speziellen Systemhalter manuell vertikal verschiebbar ist.

Das Haltegestell kann optional auf einem Fahrgestell angeordnet sein, um entlang des Untergrunds verschoben zu werden. Der Untergrund kann insbesondere ein Werkstattboden und/oder allgemein eben sein. Das Haltegestell kann sich relativ zu dem Untergrund aufrecht und insbesondere räumlich vertikal erstrecken. Das Haltegestell kann dazu eingerichtet sein, die Reflektorplatte in einem festen oder optional variierbaren Abstand relativ zum Untergrund zu tragen. Das Haltegestell kann allgemein dazu eingerichtet sein, die Reflektorplatte vor einer Fahrzeugfront zu positionieren und insbesondere auf Höhe der Scheinwerfer und/oder einer Stoßstange und/oder eines Kühlergrills zu positionieren, was jeweils einer typischen Einbauhöhe von Radarsensoren entspricht.

Der erste Aktor kann für eine stufenlose oder schrittweise Verstellung der Winkelposition eingerichtet sein. Er kann durch eine Steuereinrichtung der Vorrichtung ansteuerbar sein. Wie nachstehend noch erläutert, kann diese Steuereinrichtung zum Beispiel mit einer Diagnosevorrichtung kommunikativ verbunden sein und von dieser Vorgaben betreffend einzustellende Winkelposition erhalten. Nach Maßgabe dieser Vorgaben kann der Aktor angesteuert werden und die entsprechende Winkelposition einstellen.

Gemäß einer nicht beschränkenden Variante umfasst der Aktor einen Elektromotor. Prinzipiell können auch anders ausgebildete Aktoren vorgesehen sein, beispielsweise hydraulische oder pneumatische Zylinder, deren Linearbewegung mittels einer kinematischen Umwandlung in eine Rotationsbewegungen um die erste Achse der Reflektorplatte unwandelbar sind.

Gemäß einer Ausführungsform ist die erste Achse eine Neigungsachse, die parallel zu der Reflektorplatte und dem Untergrund verläuft. Hierbei kann es sich zum Beispiel um eine räumlich horizontale Achse handeln. Der Reflektorplatte kann in diesem Fall insbesondere in Richtung des Fahrzeuges und/oder von diesem weg kippbar sein, insbesondere im Vergleich zu einer vorzugsweise ebenso einnehmbaren parallelen Ausrichtung zum Fahrzeug. Letztere kann einer zum Untergrund orthogonalen Ausrichtung entsprechen und/oder einer Winkelposition von 0° um die erste Achse.

Prinzipiell kann eine Bezugsskala der Winkelposition und insbesondere eine Lage von 0° um die erste Achse und auch um eine nachstehend erläuterte optionale zweite Achse beliebig gewählt werden. Beispielsweise kann zur Quantifizierung der Winkelposition ein kleinster eintragbarer Winkel zwischen einer Oberfläche der Reflektorplatte und einer Bezugsebene betrachtet werden, wobei diese Bezugsebene die erste Achse umfasst und/oder orthogonal zum Untergrund verläuft. Der betrachtete Winkel kann dabei in einer Ebene liegen, welche orthogonal zum Untergrund und/oder zu der ersten Achse verläuft.

Gemäß einer anderen Ausführungsform ist die erste Achse eine Gierachse, die orthogonal zu dem Untergrund verläuft. In diesem Fall kann die Reflektorplatte relativ zu dem Fahrzeug bei vorzugsweise gleichbleibender Ausrichtung relativ zum Untergrund verdreht werden. Zur Quantifizierung der Winkelposition um diese zweite Achse kann zum Beispiel ein kleinster eintragbarer Winkel zwischen einer Oberfläche der Reflektorplatte zu einer Bezugsebene betrachtet werden, wobei diese Bezugsebene die zweite Achse umfasst und/oder orthogonal zum Untergrund verläuft. Der betrachtete Winkel kann dabei in einer Draufsicht gemessen werden und/oder in einer Ebene liegen, welche parallel zum Untergrund verläuft.

Durch die aktorisch einstellbare Winkelposition um jegliche der vorstehend genannten Achsen können Herstellervorgaben betreffend die Ausrichtung der Reflektorplatte zum Fahrzeug präzise umgesetzt werden.

Gemäß einer weiteren Ausführungsform ist der erste Aktor dazu eingerichtet, die Reflektorplatte um die erste Achse gegenüber dem feststehenden Haltegestell zu bewegen. Die Reflektorplatte kann folglich relativ zum Haltegestell bewegbar sein, wobei jedoch das Haltegestell selbst feststeht. Beispielsweise kann der Aktor Bestandteil einer Rotationsverbindung und/oder eines Rotationsgelenks sein, welches die Reflektorplatte und das Haltegestell miteinander verbindet. Der Aktor kann dazu eingerichtet sein, die Reflektorplatte aktiv um die erste Achse, welche einen Rotationsfreiheitsgrad der optionalen Rotationsverbindung und/oder des Rotationsgelenks definieren kann, zu bewegen. Das Haltegestell kann hingegen hinsichtlich sämtlicher räumlicher Freiheitsgrade und beispielsweise allgemein während der gesamten Kalibriermessung unbeweglich sein.

Gemäß einer weiteren Ausführungsform umfasst die Vorrichtung ferner wenigstens einen Sensor zum Erfassen der Winkelposition der Reflektorplatte um die erste Achse. Dieser Sensor kann gemäß einer Variante von dem Aktor umfasst und/oder baulich oder räumlich in diesen integriert sein. Beispielsweise kann es sich um einen integrierten Rotationlagesensor eines Elektromotors handeln, beispielsweise einen Resolver oder Encoder. Alternativ kann der Sensor extern vom Aktor bereitgestellt sein. Beispielsweise kann der Sensor mittels einer Abstandsmessung zu einer Außenseite der Reflektorplatte auf eine Winkelposition derselbigen schließen.

Durch das sensorbasierte Erfassen der Winkelposition kann deren präzises aktorisches Einstellen überwacht und gegebenenfalls nachgeregelt werden. Zusätzlich oder alternativ kann eine tatsächlich eingenommene und sensorbasiert erfasste Winkelposition zur späteren Verifizierung in einem Protokoll der nachstehend erläuterten Art hinterlegt werden.

Gemäß einer weiteren Ausführungsform umfasst die Vorrichtung einen zweiten Aktor, der dazu eingerichtet, eine Winkelposition der Reflektorplatte um eine zweite Achse einzustellen. Die erste und zweite Achse können orthogonal zueinander verlaufen. Die erste Achse kann eine von der Neigungsachse und der Gierachse sein und die zweite Achse kann die entsprechende andere von der Neigungsachse und der Gierachse sein. Auf diese Weise kann die Reflektorplatte aktorisch einstellbare Freiheitsgrade um unterschiedliche Rotationsachsen aufweisen. Hierdurch werden die Möglichkeiten zum präzisen Umsetzen von Herstellervorgaben für Kalibriermessungen des Radarsensors erweitert.

Gemäß einer weiteren Ausführungsform umfasst die Vorrichtung ferner wenigstens eine Kommunikationseinrichtung. Diese kann beispielsweise für eine drahtlose Kommunikation mittels einer geeigneten Kommunikationstechnologie des Standes der Technik eingerichtet sein, zum Bluetooth oder WLAN (Wireless Local Area Network). Hierfür kann die Kommunikationseinrichtung die erforderlichen Hardware-Komponenten umfassen, beispielsweise entsprechende Empfangs-und/oder Sendeeinheiten. Auch eine kabelgebundene Kommunikation samt entsprechender Schnittstelle ist gemäß Ausführungsformen möglich, beispielsweise mittels USB (Universal Serial Bus) oder HDMI (High-Definition Multimedia Interface). Hierfür kann die Kommunikationseinrichtung zum Beispiel eine geeignete physische Schnittstelle umfassen.

Eine Ausführungsform sieht vor, dass die Kommunikationseinrichtung dazu eingerichtet und/oder verwendbar ist, eine mittels eines vorstehend erwähnten Sensors erfasste Winkelposition an eine externe Diagnosevorrichtung zu übermitteln. Die Diagnosevorrichtung kann extern von der offenbarten Vorrichtung sein, beispielsweise in dem Sinne, dass diese räumlich und/oder baulich getrennt ist. Insbesondere sind weder die hier offenbarte Vorrichtung, noch die Diagnosevorrichtung Bestandteil des Fahrzeugs.

Beispielsweise kann die Diagnosevorrichtung ein Fahrzeugdiagnosegerät und/oder ein mobiles Gerät und/oder einen Server umfassen oder ein Fahrzeugdiagnosegerät oder ein Server sein. Die Diagnosevorrichtung kann ein System oder Teil eines Systems sein, welches ein Fahrzeugdiagnosegerät und einen Server umfasst. Die Diagnosevorrichtung umfasst typischerweise eine Steuereinheit, z.B. zum Verarbeiten von Daten und/oder Steuern von weiteren Einheiten.

Die Diagnosevorrichtung kann eine Datenbank umfassen oder darauf zugreifen, in der Vorgaben betreffend das Durchführen von Kalibriermessungen für den Radarsensor hinterlegt sind. Diese Vorgaben können herstellerseitig vorgegeben und/oder fahrzeugspezifisch sein. Sie können wenigstens eine anzufahrende Winkelposition oder eine Sequenz von anzufahrenden Winkelpositionen für einen bestimmten Fahrzeugtypen und/oder Radarsensor-Typen umfassen.

Gemäß einer Ausführungsform ist die Kommunikationseinrichtung der hier offenbarten Vorrichtung dazu eingerichtet, von der Diagnosevorrichtung Informationen betreffend eine von dem Aktor, insbesondere dem ersten und/oder zweiten Aktor, einzustellende Winkelposition zu erhalten. Wie erwähnt, können diese Informationen in der Diagnosevorrichtung hinterlegt sein oder von dieser abgerufen werden, beispielsweise von einem Server.

Die Erfindung betrifft auch eine Diagnosevorrichtung zum Kalibrieren wenigstens eines Radarsensors eines Fahrzeugs, wobei sämtliche Ausführungen betreffend eine Diagnosevorrichtung im Kontext der vorstehend erläuterten Vorrichtung ebenfalls auf die erfindungsgemäße Diagnosevorrichtung zutreffend können.

Die hier offenbarte Diagnosevorrichtung umfasst wenigstens eine Kommunikationseinrichtung, welche zum Beispiel analog zu jeglichen vorstehend erläuterten Ausführungsformen betreffend einer Kommunikationseinrichtung der Vorrichtung ausgebildet sein kann. Dabei ist die Kommunikationseinrichtung dazu eingerichtet:
a) von wenigstens einem Sensor einer Vorrichtung der hier offenbarten Art erfasste Winkelpositionen zu erhalten; und/oder
b) Informationen betreffend eine von wenigstens einem Aktor einer Vorrichtung der hier offenbarten Art einzustellende Winkelposition zu übermitteln.

Die gemäß der Variante a) erhaltenen Informationen können seitens der Diagnosevorrichtung (und/oder einer Steuereinrichtung der hier offenbarten Vorrichtung) ausgewertet werden, zum Beispiel hinsichtlich dessen, ob eine für den konkreten Fahrzeugtyp und/oder Typ von Radarsensor zutreffende Winkelposition tatsächlich angefahren wurde. Beispielsweise kann die Diagnosevorrichtung (und/oder einer Steuereinrichtung der hier offenbarten Vorrichtung) dazu eingerichtet sein, die erhaltene Winkelposition mit einer Soll-Position abzugleichen und nach Maßgabe dieses Abgleichs den Kalibriervorgang zu steuern. Dieses Steuern kann zum Beispiel einen wiederholten Versuch des Einstellens der Soll-Position umfassen und/oder das Ausgeben einer Fehlermeldung an das Bedienpersonal. Der Kalibriervorgang kann durch die Diagnosevorrichtung zum Beispiel in der Weise gesteuert werden, dass entsprechende Steuervorgaben an die Vorrichtung zur Winkelverstellung durch deren wenigstens ersten Aktor ausgegeben werden.

Alternativ oder zusätzlich können die gemäß Variante a) erhaltenen Informationen und genauer gesagt die Winkelpositionen in einem digitalen Kalibrierprotokoll hinterlegt. Ein solches Kalibrierprotokoll kann einen Datensatz oder eine allgemeine digitale Informationssammlung umfassen oder bilden, welche mit dem Kalibriervorgang und/oder dem zugrundeliegenden Fahrzeug verknüpft ist, beispielsweise in einer Datenbank und/oder in einem fahrzeugindividuelle Datensatz. Auf diese Weise kann zu seinem späteren Zeitpunkt die Durchführung des Kalibriervorgangs nachverfolgt werden und können etwaige Fehlerpotentiale automatisiert oder manuell identifiziert werden.

Die Erfindung betrifft auch ein Verfahren zum Kalibrieren wenigstens eines Radarsensors eines Fahrzeugs, wobei das Verfahren umfasst:
- Einstellen wenigstens einer ersten Winkelposition einer Reflektorplatte um wenigstens eine erste Achse mittels eines ersten Aktors;
- Durchführen wenigstens einer Kalibriermessung.

Optional umfasst das Verfahren ferner:
- Erfassen der eingestellten Winkelposition mittels eines Sensors.

Optional umfasst das Verfahren ferner:
- Ermitteln einer Abweichung zwischen der erfassten Winkelposition und einem Sollwert und, sofern die ermittelte Abweichung eine zulässige Abweichung nicht überschreitet, Durchführen des Kalibriervorgangs.

Das Verfahren kann ferner ein Hinterlegen der Winkelposition in einem digitalen Kalibrierprotokoll umfassen.

Zusätzlich oder alternativ können gemäß dem Verfahren mehrere Winkelpositionen eingestellt werden und kann eine Kalibriermessung bei jeder dieser Winkelpositionen durchgeführt werden.

Sämtliche weiteren Ausführungsformen und Varianten, die im Kontext der hier offenbarten Vorrichtung oder Diagnosevorrichtung erläutert werden, können auch im Kontext des Verfahrens gelten, und umgekehrt. Dies betrifft insbesondere gleichlautende oder vergleichbare Merkmale.

Beispielhafte Ausführungsformen der Erfindung werden im Folgenden anhand der schematischen Figuren erläutert.
- Figur 1: zeigt eine Vorrichtung gemäß einer Ausführungsform der Erfindung, welche ein erfindungsgemäßes Verfahren ausführt, in einer Seitenansicht.
- Figur 2: zeigt die Vorrichtung aus Figur 1 in einer Frontalansicht.

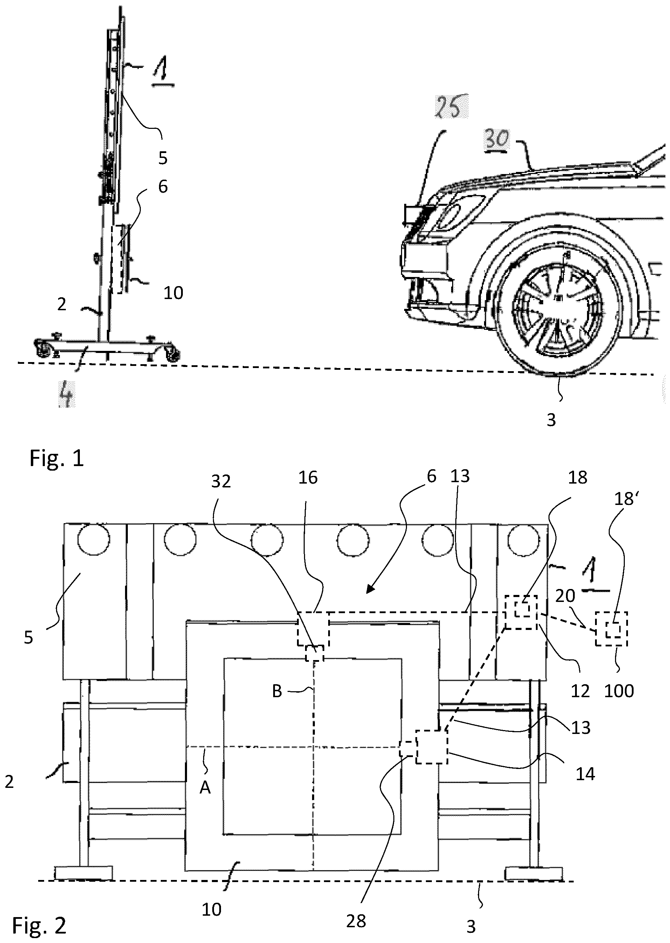

Figur 1 zeigt eine Vorrichtung 1 gemäß einer Ausführungsform der Erfindung, wobei die Vorrichtung 1 zum Kalibrieren eines Radarsensors 25 in einem teilweise dargestellten Fahrzeugs 30 verwendet wird. Das Fahrzeug 30 ist ein Kraftfahrzeug und insbesondere ein Straßenfahrzeug, wie zum Beispiel ein Personenkraftwagen (dargestellt) oder ein Lastkraftwagen (nicht dargestellt). Der Radarsensor 25 ist in einer Fahrzeugfront montiert, sodass die Vorrichtung 1 gegenüberliegend und parallel zu der Fahrzeugfront und genauer gesagt orthogonal zu einer nicht gesondert dargestellten Fahrzeuglängsachse ausgerichtet ist.

Die Vorrichtung 1 umfasst ein Haltegestell 2, dessen genaue Ausbildung nicht eingeschränkt ist und das aufrecht auf einem Untergrund 3 steht, insbesondere auf einem Werkstattboden. Beispielhaft umfasst das Haltegestell 2 ein optionales Fahrgestell 4, um relativ zu dem Fahrzeug 30 bewegt werden zu können. Die Haltegestell 2 trägt in einem oberen Bereich eine optionale Kalibriertafel 5 für ein Kalibrieren von nicht dargestellten Kamerasensoren mittels bekannter Techniken. Das Haltegestell 2 kann auch ohne eine solche Kalibriertafel 5 ausgebildet sein und insbesondere rein dem Kalibrieren von Radarsensoren 25 dienen.

Für den letztgenannten Zweck umfasst die Vorrichtung 1 eine Reflektorplatte 10, die eine allgemein ebene und insbesondere glatte Oberfläche aufweist.

Die Reflektorplatte 10 ist dem Fahrzeug 30 zugewandt, um von dem Radarsensor 25 ausgehende Radarstrahlung zu reflektieren. Die Reflektorplatte 10 entspricht mit Ausnahme ihrer erfindungsgemäßen aktorischen Verstellbarkeiten einem Bespiel des Standes der Technik.

In Figur 1 nur äußerst schematisch angedeutet ist eine winkelverstellbare mechanischen Ankopplung 6 der Reflektorplatte 10 an das Haltegestell 2. Details hiervon werden nachstehend anhand von Figur 2 erläutert.

Figur 2 zeigt eine Frontansicht der Vorrichtung 1, beispielsweise aus Sicht des Fahrzeugs 30 und/oder des Radarsensors 25 aus Figur 1. Nur ein Teil der grundsätzlich optionalen Kalibriertafel 5 ist dargestellt und diese könnte auch gänzlich weggelassen werden.

Die Größenverhältnisse in den Figuren 1 und 2 und insbesondere bei einem Vergleich dieser Figuren 1, 2 sind hinsichtlich der Vorrichtung 1 schematisch stark vereinfacht. Zum Beispiel ist die Größe der Reflektorplatte 10 in Figur 2 im Vergleich zu Figur 1 deutlich überhöht dargestellt, wobei diese Größe an sich nicht wesentlich ist und gemäß existierenden Lösungen gewählt sein kann. Auch ein Abstand der Reflektorplatte 10 zum Untergrund 3 weicht in den Figuren 1 und 2 voneinander ab, ohne dass dies für die Erfindung wesentlich oder allgemein einschränkend ist. Prinzipiell kann dieser Abstand beliebig gewählt und geeignet an eine Höhe des Radarsensors 25 angepasst werden. Hierfür kann die Reflektorplatte 10 mittels bekannter Lösungen manuell vertikal verschiebbar an dem Haltegestell 2 befestigt sein.

Als Bestandteile der winkelverstellbaren mechanischen Ankopplung 6 sind zwei Aktoren schematisch angedeutet, nämlich ein erster Aktor 14 und ein zweiter Aktor 16. Diese befinden sich grundsätzlich an der vom Betrachter abgewandten Rückseite der Reflektorplatte 10. Die angedeuteten Positionen sind lediglich beispielhaft. Auch andere Positionen der Aktoren 14, 16 sind möglich, insbesondere auch in zumindest teilweise einander überdeckender Form.

Der erste Aktor 14 ist dazu eingerichtet, die Reflektorplatte 10 um eine räumlich horizontale erste Achse A zu verkippen. Diese erste Achse A verläuft parallel zu und/oder in einer dem Fahrzeug 30 zugewandten Oberfläche der Reflektorplatte 10 sowie parallel zum Untergrund 3. Die erste Achse A entspricht einer Neigungsachse der Reflektorplatte 10.

Der zweite Aktor 16 ist dazu eingerichtet, die Reflektorplatte 10 um eine räumlich vertikale zweite Achse B zu verkippen. Diese zweite Achse A verläuft parallel zu und/oder in einer dem Fahrzeug 30 zugewandten Oberfläche der Reflektorplatte 10 sowie orthogonal zum Untergrund 3. Folglich verlaufen die erste und zweite Achse A, B grundsätzlich orthogonal zueinander. Die zweite Achse B entspricht einer Gierachse der Reflektorplatte 10.

Die Aktoren 14, 16 sind vorzugsweise separat voneinander ansteuerbar und/oder für ein voneinander unabhängiges Ausführen der jeweiligen Winkelverstellungen ausgebildet. Auch kann die winkelverstellbare mechanische Ankopplung 6 ein voneinander unabhängiges Verstellen der jeweiligen Winkelpositionen um die erste und zweite Achse A, B ermöglichen.

Gemäß nicht dargestellter Einzelheiten kann die winkelverstellbare mechanische Ankopplung 6 ferner einer der nachstehenden, beispielhaften und nicht einschränkenden mechanischen Strukturen umfassen und können die Aktoren 14, 16 für ein Bewegen dieser Strukturen ausgebildet sein, sodass die geschilderten Winkelverstellungen um die erste bzw. zweite Achse A, B möglich sind:
Gemäß einer Variante umfasst die winkelverstellbare mechanische Ankopplung 6 ein Kugelgelenk zur zentralen Lagerung der Reflektorplatte 10. Die Aktoren 14, 16 sind zum Beispiel lineare Aktoren, die zum Aufbringen einer außermittigen Linearkraft auf die Reflektorplatte 10 und dadurch Verkippen um das Kugelgelenk um eine der dargestellten Achsen A, B eingerichtet sind.
Gemäß einer anderen Variante umfasst die winkelverstellbare mechanische Ankopplung 6 ein zweiachsiges Kippmodul oder mit anderen Worten: eine zweiachsige Kippeinheit, einen zweiachsigen Kipptisch oder eine zweiachsige Kippbühne, das bzw. die unter der Reflektorplatte 10 angebracht ist und durch Aktoren 14, 16 um die Achsen A, B gekippt wird.
Gemäß einer noch anderen Variante umfasst die winkelverstellbare mechanische Ankopplung 6 einen Gelenkarm, insbesondere einen Knickarm, bei dem wenigstens zwei Gelenke um die erste bzw. zweite Achse A, B drehbar und von den Aktoren 14, 16 zum Ausführen einer solchen Drehbewegung ansteuerbar sind.

Weitere prinzipiell mögliche Varianten zum Erzeugen der angestrebten Winkelverstellungen umfassen zum Beispiel einen Hexapodmechanismus oder Pantographmechanismus, jeweils unter optionalen Ergänzen noch weiterer Aktoren.

Die Vorrichtung 1 umfasst auch schematisch angedeutete Sensoren 28, 32, um die mittels der Aktoren 14, 16 eingestellten Winkelpositionen oder auch allgemein die um die Achsen A, B jeweils eingenommenen Winkelpositionen der Reflektorplatte 10 zu erfassen.

Die Vorrichtung 1 umfasst ferner eine Steuereinrichtung 12, beispielsweise umfassend wenigstens einen Prozessor zum Umsetzen und/oder Ausführen von Rechenschritten nach Art eines Computers. Die Steuervorrichtung 12 ist über Signalverbindungen 13 signal- und insbesondere datenübertragend mit den Aktoren 14, 16 verbunden. Diese Übertragung kann insbesondere kabelgebunden erfolgen. Über dieselben Signalverbindungen 13 oder auch eine hiervon unabhängige und nicht gesondert dargestellte Signalverbindung können auch die Messsignale der Sensoren 28, 32 an die Steuereinrichtung 12 übertragen werden.

Die Steuereinrichtung 12 ist ferner mit einer externen Diagnosevorrichtung 100 verbunden, d. h. extern Bezug auf die Vorrichtung 1. Hierfür umfassen die Steuereinrichtung 12 und die Diagnosevorrichtung 100 jeweils eine Kommunikationsschnittstelle 18, 18' gemäß jeglicher hier offenbarten Variante. Zwischen diesen kann eine Signal- und insbesondere Datenübertragung über eine kabelgebundene oder kabellose Kommunikationsverbindung 20 aufgebaut werden. Die Diagnosevorrichtung 100 umfasst beispielsweise wenigstens einen Prozessor zum Umsetzen und/oder Ausführen von Rechenschritten nach Art eines Computers.

Im Betrieb erhält die Steuervorrichtung 12 über die Kommunikationsverbindung 20 Angaben betreffend wenigstens eine einzustellende Winkelposition um wenigstens eine der Achsen A oder B von der Diagnosevorrichtung 100. Anschließend steuert die Steuereinrichtung 12 über eine der Signalverbindungen 13 den entsprechenden Aktor 14, 16 zum Einstellen der Winkelposition an. Mittels des dazugehörigen Sensors 28, 32 wird die eingestellte Winkelposition gemessen und an die Steuervorrichtung 12 übertragen. Diese überprüft selbst, ob die vorgegebene (Soll-) Winkelposition erreicht wurde. Alternativ oder zusätzlich kann sie die gemessene Winkelposition an die Diagnosevorrichtung 100 übertragen, sodass dort die entsprechende Überprüfung stattfinden kann. Vorzugsweise wird die gemessene Winkelposition von der Diagnosevorrichtung 10, insbesondere wenn darauffolgend eine Kalibriermessung ausgeführt wird, in einem digitalen Kalibierprotokoll hinterlegt.

Wurde die vorgegebene Winkelposition nicht erreicht, kann eine erneute Ansteuerung des entsprechenden Aktors 14, 16 im Sinne eines Nachregelns erfolgen und/oder eine Fehlermeldung ausgegeben werden.

Wurde die vorgegebene Winkelposition erreicht, kann die Kalibriermessung gemäß bekannten Lösungen des Standes der Technik initiiert und umgesetzt werden. Beispielsweise kann die Diagnosevorrichtung 100 über eine nicht dargestellte Kommunikationsverbindung zum Fahrzeug 30 dessen Radarsensor 25 zum Ausführen einer vordefinierten Kalibriermessung veranlassen.

Ist, wie aus dem Stand der Technik ebenfalls bekannt, im Rahmen des Kalibriervorgangs eine abzufahrende Sequenz von Winkelpositionen um jegliche der Achsen A und/oder B erforderlich, können die vorstehenden Maßnahmen insbesondere bezüglich Ansteuerung der Aktoren 14, 16 und Messen mittels der Sensoren 28, 32 für jede der einzustellenden Winkelpositionen ausgeführt werden.

## Patentansprüche

1. Vorrichtung (1) zum Kalibrieren wenigstens eines Radarsensors (25) eines Fahrzeugs (30), wobei die Vorrichtung (1) umfasst:
• eine Reflektorplatte (10), die dazu eingerichtet ist, Radarstrahlung des Radarsensors (25) zu reflektieren,
• ein Haltegestell (2), das die Reflektorplatte (10) gegenüber einem Untergrund (3) abstützt,
• wenigstens einen ersten Aktor (14), der dazu eingerichtet, eine Winkelposition der Reflektorplatte (10) um wenigstens eine erste Achse (A) einzustellen.

2. Vorrichtung (1) nach Anspruch 1,
wobei die erste Achse (A) eine ist von:
• einer Neigungsachse, die parallel zu der Reflektorplatte (10) und dem Untergrund (3) verläuft;
• einer Gierachse, die orthogonal zu dem Untergrund (3) verläuft.

3. Vorrichtung (1) nach Anspruch 1 oder 2,
wobei der erste Aktor (14) dazu eingerichtet ist, die Reflektorplatte (10) um die erste Achse (A) gegenüber dem feststehenden Haltegestell (2) zu bewegen.

4. Vorrichtung (1) nach einem der vorangehenden Ansprüche,
ferner umfassend: wenigstens einen Sensor (28, 32) zum Erfassen der Winkelposition der Reflektorplatte (10) um die erste Achse (A).

5. Vorrichtung (1) nach Anspruch 2,
ferner umfassend einen zweiten Aktor (16), der dazu eingerichtet, eine Winkelposition der Reflektorplatte (10) um eine zweite Achse (B) einzustellen,
wobei die erste Achse (A) eine von der Neigungsachse und der Gierachse ist und wobei die zweite Achse (B) die entsprechende andere von der Neigungsachse und der Gierachse ist.

6. Vorrichtung (1) nach einem der vorangehenden Ansprüche,
ferner umfassend: wenigstens eine Kommunikationseinrichtung (18), die dazu eingerichtet ist:
• die mittels des Sensors (28, 32) nach Anspruch 4 erfasste Winkelposition an eine externe Diagnosevorrichtung (100) zu übermitteln; und/oder
• von der Diagnosevorrichtung (100) Informationen betreffend eine von dem erste und/oder zweiten Aktor (14, 16) nach Anspruch 5 einzustellende Winkelposition zu erhalten.

7. Diagnosevorrichtung (100) zum Kalibrieren wenigstens eines Radarsensors (25) eines Fahrzeugs (30),
wobei die Diagnosevorrichtung (100) wenigstens eine Kommunikationseinrichtung (18') aufweist, und
wobei die Kommunikationseinrichtung (18') dazu eingerichtet ist,:
c) von wenigstens einem Sensor (28, 32) einer Vorrichtung nach Anspruch 4 erfasste Winkelpositionen zu erhalten; und/oder
d) Informationen betreffend eine von wenigstens einem Aktor (14, 16) einer Vorrichtung (1) nach einem der Ansprüche 1 bis 6 einzustellende Winkelposition zu übermitteln.

8. Diagnosevorrichtung (100) nach Variante a) von Anspruch 7,
wobei die Diagnosevorrichtung (100) dazu eingerichtet ist, die Winkelposition in einem digitalen Kalibrierprotokoll zu hinterlegen.

9. Diagnosevorrichtung (100) nach Variante a) von Anspruch 7,
wobei die Diagnosevorrichtung (100) dazu eingerichtet ist, die Winkelposition mit einer Soll-Position abzugleichen und nach Maßgabe dieses Abgleichs den Kalibriervorgang zu steuern.

10. Verfahren zum Kalibrieren wenigstens eines Radarsensors (25) eines Fahrzeugs (30),
wobei das Verfahren umfasst:
• Einstellen wenigstens einer ersten Winkelposition einer Reflektorplatte (10) um wenigstens eine erste Achse (A) mittels eines ersten Aktors (14);
• Durchführen wenigstens einer Kalibriermessung.

11. Verfahren nach Anspruch 10,
ferner umfassend:
• Erfassen der eingestellten Winkelposition mittels eines Sensors (28, 32).

12. Verfahren nach Anspruch 11,
ferner umfassend:
• Ermitteln einer Abweichung zwischen der erfassten Winkelposition und einem Sollwert und, sofern die ermittelte Abweichung eine zulässige Abweichung nicht überschreitet, Durchführen des Kalibriervorgangs.

13. Verfahren nach Anspruch 11 oder 12,
ferner umfassend:
Hinterlegen der Winkelposition in einem digitalen Kalibrierprotokoll.

14. Verfahren nach einem der Ansprüche 10-13,
wobei mehrere Winkelpositionen eingestellt werden und eine Kalibriermessung bei jeder dieser Winkelpositionen durchgeführt wird.
